**Europäisches Patentamt**

**European Patent Office**

**Office européen des brevets**

(11) Veröffentlichungsnummer: **0 282 802**

**A1**

## (12) EUROPÄISCHE PATENTANMELDUNG

(21) Anmeldenummer: **88103019.1**

(22) Anmeldetag: **29.02.88**

(51) Int. Cl.⁴: **B60L 5/18**

(30) Priorität: **02.03.87 AT 454/87**

(43) Veröffentlichungstag der Anmeldung:
**21.09.88 Patentblatt 88/38**

(84) Benannte Vertragsstaaten:
**AT CH DE FR GB LI**

(71) Anmelder: **SIEMENS AKTIENGESELLSCHAFT ÖSTERREICH**
**Siemensstrasse 88-92**
**A-1210 Wien(AT)**

(84) **AT**

(71) Anmelder: **Siemens Aktiengesellschaft Berlin und München**
**Wittelsbacherplatz 2**
**D-8000 München 2(DE)**

(84) **CH DE FR GB LI**

(72) Erfinder: **Schöller, Karl Ronald**
**Klosterneuburgerstrasse 9/8**
**A-1200 Wien(AT)**

(54) **Signalübertragungssystem.**

(57) Signalübertragungssystem mit starken Temperaturschwankungen ausgesetzten Übertragungsleitungen für die signalübertragenden Zustandsgrößen, das störende Einflüsse der Temperaturschwankungen auf die Signalübertragung vermeidet. Dies wird dadurch erzielt, daß am Eingang des Signalübertragungssystems zwei die signalübertragende Zustandsgröße beeinflussende Meßwertgeber vorgesehen sind, an die über nebeneinander geführte Übertragungsleitungen ausgangsseitig zwei Meßwertsensoren angeschlossen sind und daß gegensinnige Änderungen der Zustandsgröße in den Meßwertgebern als Signale erzeugt und die Differenzen der Zustandsgrößen in den Meßwertsensoren als Signale erkannt werden. Im speziellen wird dieses System zur Feststellung des Anpreßdruckes von Stromabnehmern elektrischer Triebfahrzeuge durch Messung einer druckabhängigen Verformung der Stromabnehmerpalette mittels hydraulischer oder pneumatischer Druckgeber verwendet.

FIG 1

## Signalübertragungssystem

Die Erfindung betrifft ein Signalübertragungssystem mit starken Temperaturschwankungen ausgesetzten Übertragungsleitungen für die signalübertragenden Zustandsgrößen, insbesondere zur Feststellung des Anpreßdruckes von Stromabnehmern elektrischer Triebfahrzeuge durch Messung einer kraftabhängigen Verformung der Stromabnehmerpalette mittels hydraulischer oder pneumatischer Druckgeber.

Die Problematik der Kompensation von Temperaturschwankungen in den Übertragungsleitungen von Signalübertragungssystemen ergibt sich nicht nur bei der Steuerung des Anpreßdruckes von Stromabnehmern von Triebfahrzeugen, die sehr unterschiedlichen Temperaturen ausgesetzt sind, sondern auch bei gesteuerten Maschinen, wie z.B. bei Schweißrobotern, bei denen relativ hohe Temperaturunterschiede auch betriebsmäßig auftreten.

Zur Temperaturkompensation werden, vor allem bei elektrischen Übertragungssystemen, temperaturabhängige Kompensationsmittel, z.B. Kalt- oder Heißleiter verwendet, deren Wirkung jedoch auf bestimmte Temperaturbereiche beschränkt ist bzw. nur in beschränkten Temperaturbereichen eine lineare Temperaturkompensation ermöglicht. Dies hängt damit zusammen, daß die Temperaturabhängigkeit vorwiegend bei den Absolutwerten der zur Signalübertragung herangezogenen elektrischen oder mechanischen Zustandsgrößen, wie durch thermische Widerstandsänderungen bestimmten Strömen oder durch die Temperaturen direkt betroffenen Druckänderungen von Gasen oder Flüssigkeiten, in vollem Ausmaß auftritt.

Das erfindungsgemäße Signalübertragungssystem macht sich den Umstand zunutze, daß differentielle Änderungen von Zustandsgrößen geringerer Temperaturabhängigkeit unterliegen als deren Absolutwerte, um Temperatureinflüsse auf die Signalübertragung weitgehend zu vermeiden. Erfindungsgemäß wird dies dadurch erzielt, daß am Eingang des Signalübertragungssystems zwei die signalübertragende Zustandsgröße beeinflussende Meßwertgeber vorgesehen sind, an die über zwei nebeneinander geführte Übertragungsleitungen ausgangsseitig zwei Meßwertsensoren angeschlossen sind und daß gegensinnige Änderungen der Zustandsgröße in den Meßwertgebern als Signale erzeugt und Differenzen der Zustandsgrößen in den Meßwertsensoren als Signale erkannt werden.

In Anwendung auf Stromabnehmer elektrischer Triebfahrzeuge mit kraftabhängig verformbarer Stromabnehmerpalette ist die Erfindung dadurch realisierbar, daß die Stromabnehmerpalette aus einem Schleifstückträger und einem am Stromabnehmer-Oberarm schwenkbar angeordneten Rahmen besteht, der mit der Stromabnehmerpalette mittels eines parallelführenden, federnden Schwenkhabelsystems verbunden ist und daß weiters am Rahmen zwei als Meßwertgeber dienende Druckgeber angeordnet sind, deren Deckel mittels Pleuelstangen durch das Schwenkhebelsystem gegensinnig verschiebbar sind und daß schließlich an jeden der Druckgeber je eine hydraulische oder pneumatische Druckübertragungsleitung angeschlossen ist, von denen jede entlang des Stromabnehmer-Ober-und Unter-armes zu zwei Druckmeßsensoren geführt ist, die der Messung des Differenzdruckes dienen, dessen Meßwert zur Regelung des Anpreßdruckes des Stromabnehmers herangezogen ist.

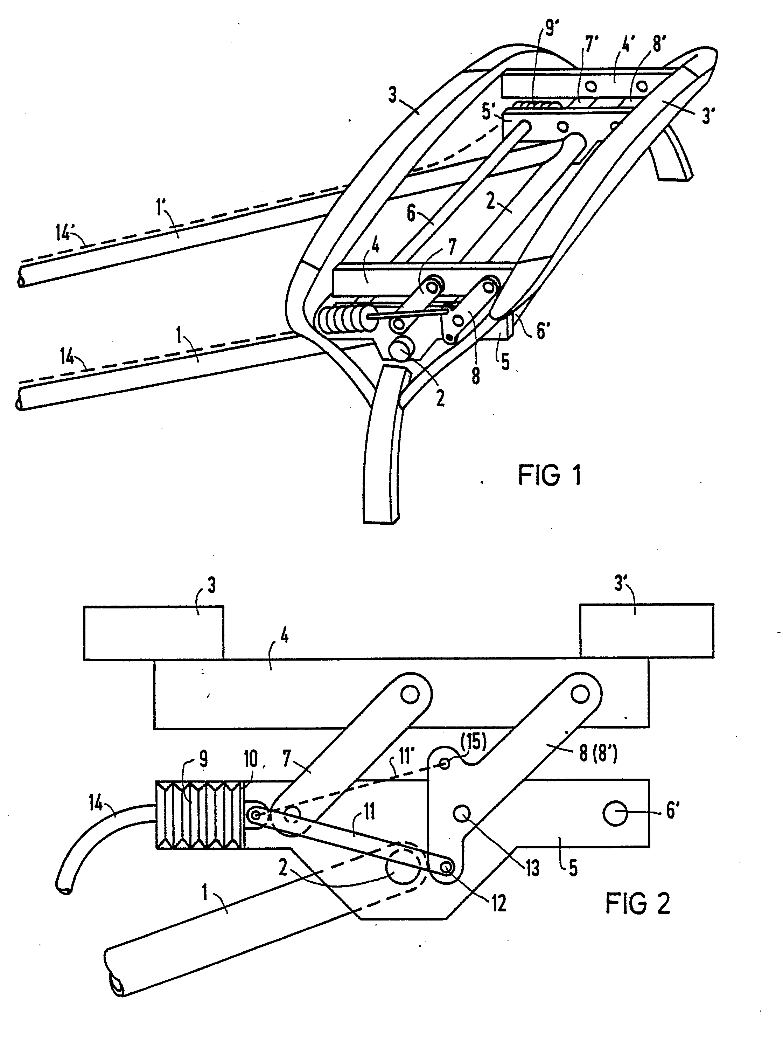

Ein Ausführungsbeispiel der Erfindung ist in Fig. 1 der Zeichnung dargestellt und anhand der Skizze der Fig. 2 näher erläutert.

Fig. 1 zeigt den Oberarm eines Halbscherenstromabnehmers mit aufgesetzter Stromnehmerpalette. Der Oberarm des Stromabnehmers besteht aus zwei nach unten zusammenlaufenden Gabelästen 1 und 1′, die an ihren oberen Enden durch ein Tragrohr 2 miteinander verbunden sind. Die Stromabnehmerpalette besteht aus einem Schleifstückträger, aufgebaut aus den Schleifstücken 3, 3′ und zwei Verbindungsstegen 4, 4′, sowie aus einem Rahmen, der auf dem Tragrohr 2 schwenkbar aufgesetzt ist und im einzelnen aus zwei Seitenteilen 5, 5′ besteht, die durch zwei Streben 6, 6′ miteinander verbunden sind. Der Rahmen 5, 5′, 6, 6′ ist mit dem Schleifstückträger 3, 3′, 4, 4′ mittels eines parallelführenden Schwenkhebelsystems federnd verbunden. Das Schwenkhebelsystem besteht aus vier Schwenkhebeln 7, 8 und 7′, 8′, die an den Verbindungsstegen 4, 4′ einerseits und an den Seitenteilen 5, 5′ des Rahmens anderseits federnd angelenkt sind, derart, daß sie den Schleifstückträger 3, 3′, 4, 4′ und den Rahmen 5, 5′, 6, 6′ auseinander zu drücken versuchen. An den Seitenteilen 5, 5′ des Rahmens ist je eine Druckgeberdose 9, 9′ mit einem Ende befestigt, die als Faltenbalg ausgebildet ist und deren freies Ende mit einem Deckel 10, 10′ abgeschlossen ist, der, wie aus Fig. 2 zu ersehen ist, mittels einer Pleuelstange 11 mit einem am Schwenkhebel 8 befindlichen Gelenk 12 verbunden ist. Bei einer Erhöhung des Anpreßdruckes des Stromabnehmers verringert sich die Distanz zwischen dem Verbindungssteg 4 des Schleifstückträgers und dem Seitenteil 5 des Rahmens, wodurch die Schwenkhebel 7 und 8 im Uhrzeigersinn verschwenkt werden. Hierbei verdreht sich der Schwenkhebel 8 um das mit 13 bezeichnete Gelenk am Seitenteil 5 und verschiebt die Pleuelstange 11 nach links, wodurch die Druckgeberdose 9 zusammengedrückt wird und sich der Luftdruck in der Dose erhöht. Dieser erhöhte Luftdruck wird mittels einer Schlauchleitung 14, die, wie in Fig. 1 durch strichlierte Linien dargestellt, längs des Gabelastes 1 und längs des Unterarmes des Stromabnehmers zu einem in der Zeichnung nicht dargestellten Druckmeßsensor geführt, der den erhöhten Luftdruck erkennt.

Auf der Gegenseite der Stromabnehmerpalette ist ebenfalls eine Druckgeberdose 9' angeordnet, deren Deckel mit einer weiteren, in Fig. 2 durch eine punktierte Linie 11' angedeutete Pleuel stange mit einem weiteren Gelenk (15) am (in Fig. 2 nicht sichtbaren) Schwenkhebel 8' verbunden ist. Bei einer Erhöhung der auf die Stromabnehmerpalette wirkenden Kraft wird der Schwenkhebel 8' im Uhrzeigersinn (von Fig. 2 aus gesehen) verdreht und die durch die punktierte Linie 11' angedeutete Pleuelstange nach rechts gezogen und damit der Luftdruck in der Druckmeßdose 9' erniedrigt. Diese Druckverminderung wird durch eine an die Druckmeßdose 9' angeschlossene zweite Schlauchleitung 14', die ebenso wie die Schlauchleitung 14 entlang des Stromabnehmergestänges geführt ist, einem zweiten, ebenfalls nicht dargestellten Druckmeßsensor gemeldet.

Die Differenz zwischen dem solcherart in der Druckluftleitung 14 erhöhten Druck und dem in gleichartiger Weise in der Druckluftleitung 14' erniedrigten Druck wird von den beiden Druckmeßsensoren als eine die Kraft auf die Stromabnehmerpalette abbildende Größe ermittelt und zur Regelung des Stromabnehmerhubes herangezogen.

## Ansprüche

1. Signalübertragungssystem mit starken Temperaturschwankungen ausgesetzten Übertragungsleitungen für die signalübertragenden Zustandsgrößen, insbesondere zur Feststellung des Anpreßdruckes von Stromabnehmern elektrischer Triebfahrzeuge durch Messung einer druckabhängigen Verformung der Stromabnehmerpalette mittels hydraulischer oder pneumatischer Druckgeber **dadurch gekennzeichnet,** daß am Eingang des Signalübertragungssystems zwei die signalübertragende Zustandsgröße beeinflussende Meßwertgeber vorgesehen sind, an die über zwei nebeneinander geführte Übertragungsleitungen ausgangsseitig zwei Meßwertsensoren angeschlossen sind und daß gegensinnige Änderungen der Zustandsgröße in den Meßwertgebern als Signale erzeugt und Differenzen der Zustandsgrößen in den Meßwertsensoren als Signale erkannt werden.

2. Signalübertragungssystem nach Anspruch 1 in Anwendung auf einen Stromabnehmer elektrischer Triebfahrzeuge mit druckabhängig verformbarer Stromabnehmerpalette, **dadurch gekennzeichnet,** daß die Stromabnehmerpalette aus einem Schleifstückträger (3,3',4,4') und einem am Stromabnehmer-Oberarm (1,1',2) schwenkbar angeordneten Rahmen (5,5',6,6') besteht, der mit der Stromabnehmerpalette (3,3',4,4') mittels eines parallelführenden, federnden Schwenkhebelsystems (7,7',8,8') verbunden ist und daß weiters am Rahmen (5,5',6,6') zwei als Meßwertgeber dienende Druckgeberdosen (9,9') angeordnet sind, deren Deckel (10) mittels Pleuelstangen (11, 11') durch das Schwenkhebelsystem (7,7', 8,8') gegensinnig verschiebbar sind und daß schließlich an jeden der Druckgeberdosen (9,9') je eine hydraulische oder pneumatische Druckübertragungsleitung (14,14') angeschlossen ist, von denen jede entlang des Stromabnehmer-Ober-und Unterarmes zu zwei Druckmeßsensoren geführt ist, die der Messung des Differenzdruckes dienen, dessen Meßwert zur Regelung des Anpreßdruckes des Stromabnehmers herangezogen ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 365 758 (L. FAIVELEY)<br>* Seite 2, Zeilen 11-37; Anspruch; Unteranspruch 10 * | 1 | B 60 L 5/18 |
| A | | 2 | |
| | --- | | |
| Y | DE-A-1 573 656 (G. SCHÖNEBEEK)<br>* Anspruch 1 * | 1 | |
| | --- | | |
| Y | GB-A- 616 376 (WALLACE & TIERNAN LTD)<br>* Seite 1, Zeilen 8-19,67-78; Figur 1 * | 1 | |
| | --- | | |
| A | PATENT ABSTRACTS OF JAPAN, Band 11, Nr. 19 (P-537)[2466], 20. Januar 1987; & JP-A-61 193 042 (MITSUBISHI HEAVY IND. LTD) 27-08-1986 | | |
| | --- | | |
| A | DE-A-2 522 876 (A. STEMMANN)<br>* Seite 5, vorletzte Zeile; Figur 2 * | 1,2 | |
| | ----- | | |

**RECHERCHIERTE SACHGEBIETE (Int. Cl.4)**

B 60 L
G 01 L

Der vorliegende Recherchenbericht wurde für alle Patentansprüche erstellt

| Recherchenort | Abschlußdatum der Recherche | Prüfer |
|---|---|---|
| DEN HAAG | 08-06-1988 | BEYER F. |

EPO FORM 1503 03.82 (P0403)